# EUROPEAN PATENT APPLICATION

(11) **EP 4 834 526 A1**
(43) Date of publication of application: **04.11.2026**
(21) Application number: 24913046.9
(22) Date of filing: 26.12.2024
(51) Int. Cl.: B24B 55/02, B24B 45/00, B24D 5/10, B24D 5/12, B28D 1/24, B28D 7/02

(54) **CUTTING GRINDSTONE MOUNTING STRUCTURE**

(30) Priority: 27.12.2023 JP 2023221381
(71) Applicant: FS Technical Corporation, Tokyo 125-0054 (JP)
(72) Inventor: FUJITA, Shogo, Tokyo 125-0054 (JP)
(74) Representative: MERH-IP Matias Erny Reichl Hoffmann Patentanwälte PartG mbB
(86) International application number: PCT/JP2024/046254
(87) International publication number: WO 2025/143160

(57) **Abstract**

[Object] Provided is a mounting structure for a cutting wheel that can achieve both stably supplying the cooling liquid to a cutting wheel and detachably and appropriately mounting the cutting wheel on a drive shaft.

[Solution Means] A mounting structure for a cutting wheel 20 to which a cooling liquid is capable of being supplied includes: a drive shaft 11 that includes a rotation preventing shaft portion 11a and a male threaded shaft portion 11b; an inner flange 61 that engages the rotation preventing shaft portion 11a and receives the cutting wheel 20; a lock nut 62 that threadedly engages the male threaded shaft portion and sandwiches and secures the cutting wheel; a cooling liquid introduction mechanism 84, 86 that is provided in at least one of the drive shaft 11 and the lock nut 62 and introduces the supplied cooling liquid to an inlet port 35a; and a supply joint portion 63 including a connection male threaded member 92 fluidly connected to the cooling liquid introduction mechanism 84, 86 and a joint body 91 that is fluidly connected to the cooling liquid supply source.

## Description

### TECHNICAL FIELD

The present invention relates to a mounting structure for mounting a cutting wheel on a cutting apparatus such as a disk grinder, and in particular, to a mounting structure capable of supplying a cooling liquid to a cutting wheel configured for use with a cooling liquid.

### BACKGROUND ART

Conventionally, as a mounting structure for a cutting wheel of this type, a structure has been known in which a rotary blade including through holes for a cooling medium is fitted to a hollow drive shaft including a fluid flow path (see Patent Literature 1).

This apparatus includes the drive shaft having a hollow portion as the fluid flow path, a manifold through which the drive shaft penetrates rotatably in a watertight manner, and a liquid supply source that supplies a cooling medium to the manifold via a conduit, and the rotary blade is fitted to the distal end portion of the drive shaft.

The cooling medium from the supply source is supplied to the manifold via the conduit. In the manifold, the cooling medium is supplied from a manifold-side opening end to the fluid flow path of the rotating drive shaft, and the cooling medium is supplied from a rotary-blade-side opening end formed at the distal end to the through holes of the rotary blade. The cooling medium flowing into the rotary blade is supplied to a blade portion via the through holes and holes.

### CITATION LIST

### Patent Literature

Patent Literature 1: Japanese Utility Model Application Publication No. 64-42108

### SUMMARY OF INVENTION

### Technical Problem

In such a conventional mounting structure in which a rotary blade (cutting wheel) is fitted through a mounting hole to a drive shaft including a hollow portion as a fluid flow path for a cooling medium, the fitting portion is structurally fragile. Therefore, there has been a problem that both stably supplying a cooling liquid to the rotary blade (cutting wheel) and detachably and appropriately mounting the rotary blade on the drive shaft cannot be achieved.

It is an object of the present invention to provide a mounting structure for a cutting wheel that can achieve both stably supplying a cooling liquid to the cutting wheel and detachably and appropriately mounting the cutting wheel on a drive shaft. Solution to Problem

The present invention provides a mounting structure for a cutting wheel in which a cooling liquid is capable of being supplied to the cutting wheel during rotational driving, the cutting wheel having an inlet port of a cooling liquid flow path formed in a portion defining a mounting hole, the mounting structure including: a drive shaft that includes a rotation preventing shaft portion provided on an apparatus body side and a male threaded shaft portion protruding from the rotation preventing shaft portion and rotationally drives the cutting wheel mounted thereon; an inner flange that engages the rotation preventing shaft portion and receives the cutting wheel mounted on the male threaded shaft portion; a lock nut that includes a female threaded portion threadedly engaging the male threaded shaft portion and sandwiches and secures the cutting wheel with the inner flange; a cooling liquid introduction mechanism that is provided in at least one of the drive shaft and the lock nut in a state in which the lock nut threadedly engages the drive shaft and introduces the cooling liquid supplied from a cooling liquid supply source to the inlet port; and a supply joint portion including a shaft-shaped rotation portion that is arranged coaxially with the drive shaft and fluidly connected to the cooling liquid introduction mechanism and a non-rotation member portion that is fluidly connected to the cooling liquid supply source, wherein the shaft-shaped rotation portion includes an axial flow path that is in communication with the cooling liquid introduction mechanism, and the non-rotation member portion includes an annular liquid reservoir that surrounds the shaft-shaped rotation portion and is in communication with the axial flow path in a radial direction, and a connection port portion that is in communication with the annular liquid reservoir and to which the cooling liquid supply source is connected.

According to this configuration, the cutting wheel can be reliably attached (mounted) on the drive shaft in a form in which the cutting wheel is sandwiched and secured between the inner flange and the lock nut. As a result, the cutting wheel can be detachably and appropriately mounted on the drive shaft.

Furthermore, in this state, a cooling liquid can be supplied from the supply joint portion to the cutting wheel via the cooling liquid introduction mechanism. In this case, since the cooling liquid is configured to be introduced from the annular liquid reservoir that is in communication with the connection port portion of the non-rotation member portion to the cooling liquid introduction mechanism via the axial flow path of the shaft-shaped rotation portion, the cooling liquid can be smoothly supplied from the non-rotation member portion that does not rotate to the cooling liquid introduction mechanism and the cutting wheel that rotate.
Accordingly, the cooling liquid can be stably supplied to the cutting wheel.

In this case, the cooling liquid introduction mechanism preferably includes an annular cooling liquid reservoir provided between the lock nut and the cutting wheel so as to face the inlet port, and an introduction flow path portion having an upstream side thereof in communication with the axial flow path and a downstream side thereof in communication with the cooling liquid reservoir.

According to this configuration, in the cutting wheel sandwiched and secured between the inner flange and the lock nut, the inlet port for the cooling liquid faces the annular cooling liquid reservoir. On the other hand, the cooling liquid flowing in from an introduction flow path of the supply joint portion is introduced to the cooling liquid reservoir via the introduction flow path portion. Then, the cooling liquid in the cooling liquid reservoir is supplied to the cutting wheel via the inlet port. Since a centrifugal force acts on the cooling liquid supplied to the cutting wheel that rotates, the cooling liquid flowing in from the supply joint portion is smoothly introduced to the cutting wheel via the introduction flow path portion and the cooling liquid reservoir.

In this case, the introduction flow path portion preferably includes a recessed flow path that is recessed in an inner peripheral surface of the female threaded portion and extends in an axial direction along the female threaded portion from the cooling liquid reservoir, and a communication flow path that establishes communication between the recessed flow path and the axial flow path.

According to this configuration, only by forming the recessed flow path in the axial direction on the female threaded portion of the lock nut threadedly engaging the male threaded shaft portion, the flow path for the cooling liquid can be formed near the axial center without impairing a threaded engagement function of the lock nut. Note that a pair of recessed flow paths extending in the axial direction is preferably formed at positions point-symmetrical by 180° in the circumferential direction.

Similarly, the introduction flow path portion preferably includes an annular groove flow path that is formed on an outer peripheral surface of the male threaded shaft portion so as to face the cooling liquid reservoir, a straight flow path that is formed on the outer peripheral surface of the male threaded shaft portion and extends from the annular groove flow path to a distal end of the male threaded shaft portion, and a communication flow path that establishes communication between the straight flow path and the axial flow path.

According to this configuration, only by forming the annular groove flow path and the straight flow path continuous with the annular groove flow path on the outer peripheral surface of the male threaded shaft portion, a flow path for the cooling liquid can be easily formed near the axial center. Note that a pair of straight flow paths extending in the axial direction is preferably formed at positions point-symmetrical by 180° in the circumferential direction.

Similarly, the introduction flow path portion preferably includes a radial hole flow path that is formed on an outer peripheral surface of the male threaded shaft portion so as to face the cooling liquid reservoir, an axial hole flow path that is formed at an axial center portion of the male threaded shaft portion and extends from the radial hole flow path to a distal end of the male threaded shaft portion, and a communication flow path that establishes communication between the axial hole flow path and the axial flow path.

According to this configuration, only by forming the radial hole flow path and the axial hole flow path continuous with the radial hole flow path on the male threaded shaft portion, the flow path for the cooling liquid can be easily formed at the axial center and near the axial center. Note that the radial hole flow path preferably penetrates the male threaded shaft portion in the radial direction.

Furthermore, the drive shaft preferably includes an extended shaft portion that penetrates the apparatus body and is extended to an opposite side thereof while being continuous with a base-end side of the male threaded shaft portion, and the supply joint portion is preferably mounted on the extended shaft portion, and the introduction flow path portion preferably includes a radial hole flow path that is formed on an outer peripheral surface of the male threaded shaft portion so as to face the cooling liquid reservoir, an extended axial hole flow path that is formed at axial center portions of the male threaded shaft portion and the extended shaft portion and extends from the radial hole flow path to a distal end of the extended shaft portion, and a communication flow path that establishes communication between the extended axial hole flow path and the axial flow path.

According to this configuration, since the inner flange, the cutting wheel, and the lock nut are configured to be mounted on one end portion of the drive shaft penetrating the apparatus body and the supply joint portion is configured to be mounted on the other end portion thereof, a weight balance of the apparatus body is favorably maintained during a hand-held operation, and operability is not impaired.

On the other hand, only by forming the radial hole flow path and the extended axial hole flow path continuous with the radial hole flow path on the male threaded shaft portion and the extended shaft portion, the flow path for the cooling liquid can be easily formed at the axial center and near the axial center.

On the other hand, the inner flange preferably includes a first seal member that seals a gap between the inner flange and the cutting wheel, and a second seal member that seals a gap between the inner flange and the male threaded shaft portion.

According to this configuration, since the gap between the inner flange and the cutting wheel and the gap between the inner flange and the male threaded shaft portion are sealed by the first seal member and the second seal member, respectively, the cooling liquid is prevented from leaking to the apparatus body side via the inner flange and the male threaded shaft portion. As a result, the cooling liquid can be effectively prevented from entering the apparatus body.

Furthermore, the lock nut preferably includes a third seal member that seals a gap between the lock nut and the cutting wheel.

According to this configuration, since the gap between the lock nut and the cutting wheel is sealed by the third seal member, the cooling liquid is prevented from leaking from the lock nut. As a result, unnecessary leakage of the cooling liquid can be effectively prevented.

### BRIEF DESCRIPTION OF DRAWINGS

[Fig. 1] Fig. 1 is an external perspective view of a cutting apparatus according to an embodiment.
[Fig. 2] Fig. 2 is an external perspective view of the cutting apparatus with a disk cover removed therefrom.
[Fig. 3] Figs. 3A and 3B are, respectively, a plan view and a cross-sectional side view of a cutting wheel according to the embodiment.
[Fig. 4] Figs. 4A and 4A are, respectively, an enlarged plan view and an enlarged cross-sectional side view of the cutting wheel according to a first modified example.
[Fig. 5] Figs. 5A and 5A are, respectively, an enlarged plan view and an enlarged cross-sectional side view of the cutting wheel according to a second modified example.
[Fig. 6] Fig. 6 is a cross-sectional side view illustrating a mounting structure for the cutting wheel according to a first embodiment.
[Fig. 7] Fig. 7 is an exploded cross-sectional side view illustrating the mounting structure for the cutting wheel according to the first embodiment.
[Fig. 8] Figs. 8A, 8B, and 8C are, respectively, a front view, a side view, and a back view of an inner flange in the mounting structure.
[Fig. 9] Figs. 9A, 9A, and 9A are, respectively, a front view, a side view, and a back view of a lock nut in the mounting structure.
[Fig. 10] Figs. 10A, 10B, and 10C are, respectively, a side view, a back view, and a bottom view of a joint body in a cooling liquid joint portion.
[Fig. 11] Figs. 11A, 11, and 11C are, respectively, a front view, a side view, and a back view of a connection male threaded member in the cooling liquid joint portion.
[Fig. 12] Fig. 12 is a cross-sectional side view illustrating a mounting structure for the cutting wheel according to a second embodiment.
[Fig. 13] Fig. 13 is a cross-sectional side view illustrating a mounting structure for the cutting wheel according to a third embodiment.
[Fig. 14] Fig. 14 is a cross-sectional side view illustrating a mounting structure for the cutting wheel according to a fourth embodiment.

### DESCRIPTION OF EMBODIMENTS

With reference to the accompanying drawings, a case will be described in which a mounting structure for a cutting wheel according to an embodiment of the present invention is applied to a cutting apparatus. This cutting apparatus has a basic configuration of a disk grinder, and cuts concrete, mortar, tile, and the like by grinding using a cutting wheel mounted thereon as a disc. The cutting wheel according to the embodiment has a cooling liquid flow path formed therein, and the cutting apparatus has, for cutting a target object, a function of supplying a cooling liquid to the cutting wheel and a function of collecting a cooling waste liquid mixed with grinding debris. Therefore, although omitted in these figures, a cooling liquid supply apparatus constituting a cooling liquid supply source and a waste liquid collection apparatus are connected to the cutting apparatus.

### [Cutting Apparatus]

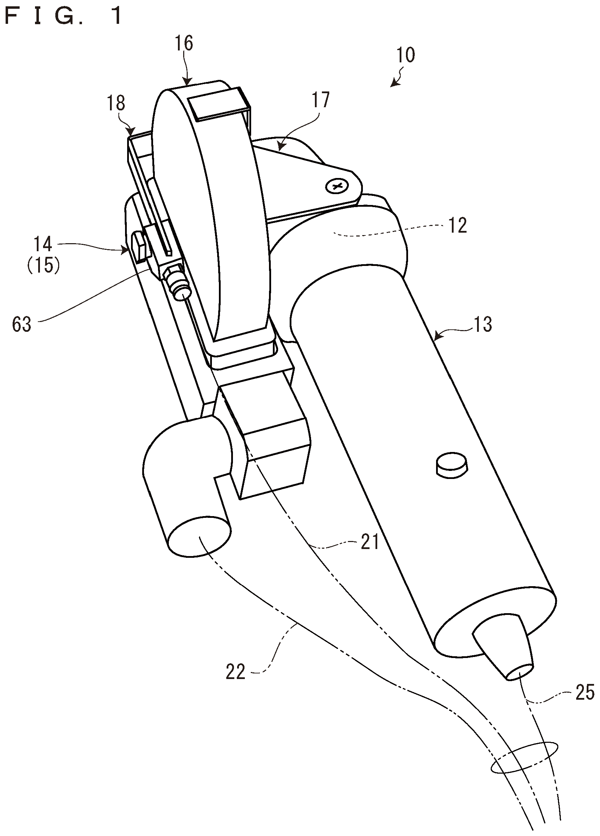

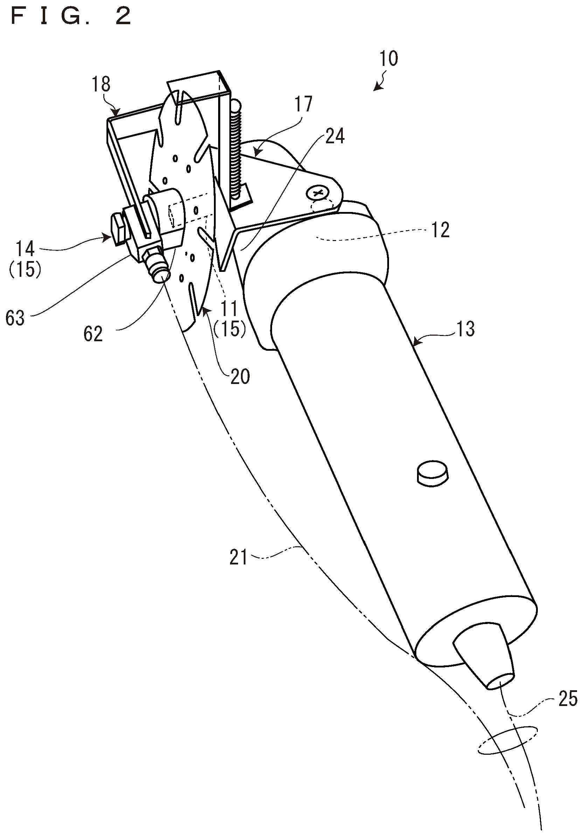

Fig. 1 is an external perspective view of a cutting apparatus according to an embodiment. Fig. 2 is an external perspective view of the cutting apparatus with a disk cover removed therefrom. As illustrated in these figures, the cutting apparatus 10 has a basic configuration of a so-called disk grinder in which a drive shaft 11 for mounting a cutting wheel 20 (disk) is exposed, and includes a motor 12 having the drive shaft 11, an apparatus body 13 incorporating the motor 12, a mounting unit 14 for supplying a cooling liquid to the cutting wheel 20 mounted on the drive shaft 11, and a disk cover 16 for covering the cutting wheel 20. Furthermore, the drive shaft 11 and the mounting unit 14 constitute a mounting structure 15 for the cutting wheel 20 recited in the claims.

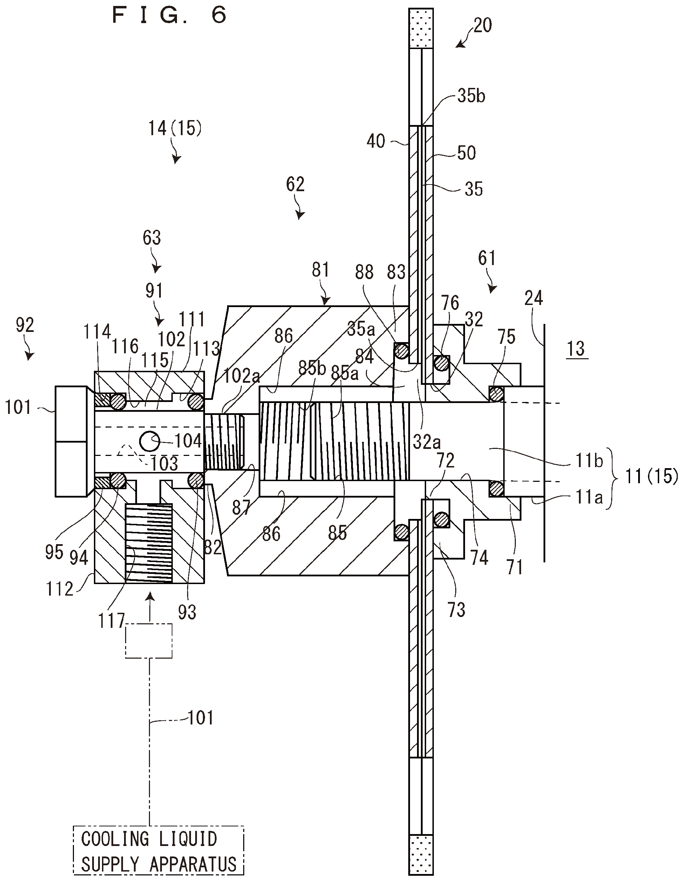

Furthermore, the cutting apparatus 10 includes a cover holder 17 for holding the disk cover 16 on the apparatus body 13, and a rotation preventing arm 18 for preventing a part of the mounting unit 14 from rotating. Furthermore, as will be described in detail later, a cooling liquid supply apparatus (see Fig. 6) is connected via a liquid supply tube 21 to the mounting unit 14 of the cutting apparatus 10 thus configured, and a waste liquid collection apparatus (not illustrated) is connected via a waste liquid tube 22 to the disk cover 16.

The apparatus body 13 incorporating the motor 12 has a substantially cylindrical shape as a hand-held electric tool, and is provided with a disk mounting base 24 on a distal-end side thereof and the drive shaft 11 protruding from the center of the disk mounting base 24. A power cord 25 is connected to a base end of the apparatus body 13. Furthermore, the power cord 25, the liquid supply tube 21, and the waste liquid tube 22 are integrally bundled together so as not to interfere with operation.

### [Cutting Wheel]

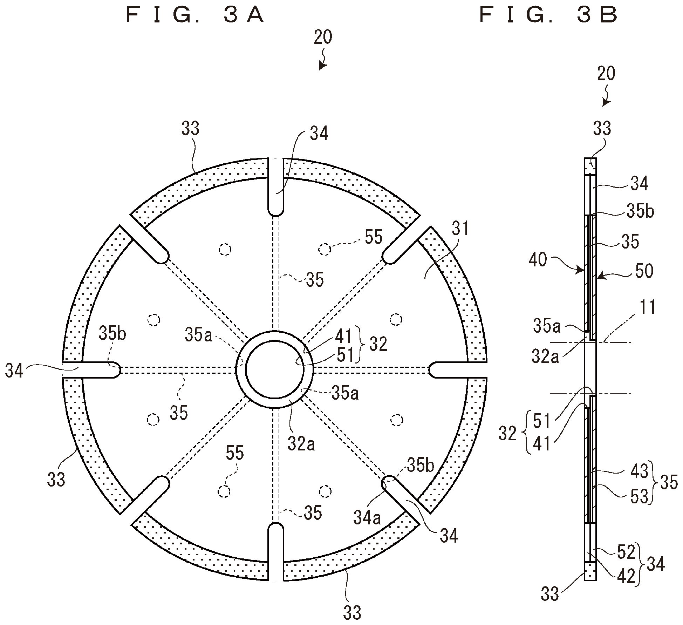

Fig. 3 is a structural diagram of the cutting wheel. As illustrated in the figure, the cutting wheel 20 is a so-called diamond wheel, and includes a disk-shaped blade substrate 31 having a mounting hole 32 formed at a central portion thereof for mounting on the drive shaft 11, a plurality of (eight) segment chips 33 brazed to an outer peripheral end of the blade substrate 31, a plurality of (eight) relief grooves 34 formed at an outer peripheral portion of the blade substrate 31, and a plurality of (eight) cooling liquid flow paths 35 formed radially in the blade substrate 31. Furthermore, the blade substrate 31 is formed by bonding a thin disk-shaped first substrate 40 and a thin disk-shaped second substrate 50 together (see Fig. 3B).

The first substrate 40 has a first mounting hole 41 constituting the mounting hole 32, eight first U-shaped grooves 42 constituting the relief grooves 34, and eight first flow path grooves 43 constituting the cooling liquid flow paths 35. Similarly, the second substrate 50 has a second mounting hole 51 constituting the mounting hole 32, eight second U-shaped grooves 52 constituting the relief grooves 34, and eight second flow path grooves 53 constituting the cooling liquid flow paths 35. Furthermore, the blade substrate 31 is configured by arranging the first substrate 40 and the second substrate 50 thus formed with rear surfaces thereof facing each other and spot-welding the first substrate 40 and the second surface 50 together at eight welding portions 55 (see Fig. 3A).

The cutting wheel 20 thus configured is mounted on the drive shaft 11 such that the first substrate 40 is positioned on an inner side (apparatus body 13 side) and the second substrate 50 is positioned on an outer side. On the other hand, the second mounting hole 51 is formed to have a larger diameter than the first mounting hole 41 (see Fig. 3B). Thus, a mounting hole 32 having an annular step portion 32a formed at a central portion of the blade substrate 31. That is, the annular step portion 32a is formed in a portion defining the mounting hole 32. As will be described in detail later, the cutting wheel 20 according to the present embodiment is configured to supply a cooling liquid via the annular step portion 32a.

An inlet port 35a of each cooling liquid flow path 35 opens into the annular step portion 32a, and an outlet port 35b of each cooling liquid flow path 35 opens into the groove bottom of each relief groove 34. Accordingly, in the cutting wheel 20, a cooling liquid flows radially from the annular step portion 32a into the cooling liquid flow paths 35 and is further supplied to the segment chips 33 via the relief grooves 34.

The above-described annular step portion 32a constitutes an annular liquid reservoir into which the inlet ports 35a of the cooling liquid flow paths 35 open, but a structure corresponding to this liquid reservoir may be configured as follows.

### [Modified Example]

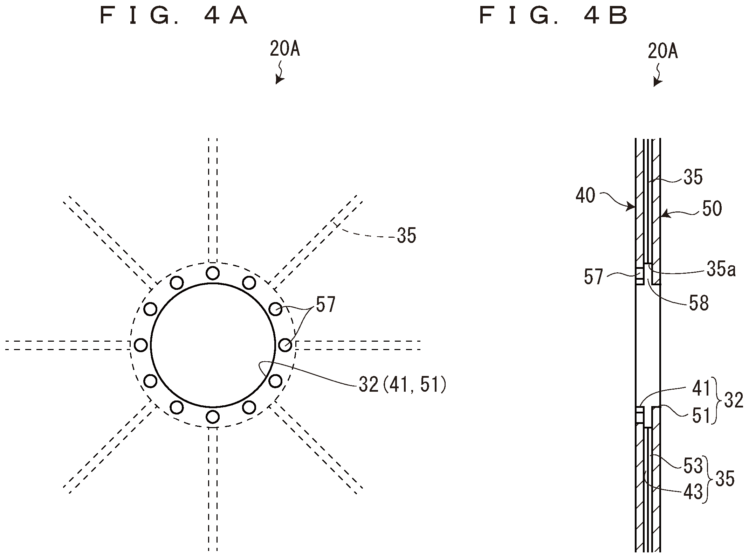

Fig. 4 illustrates a structure of a cutting wheel 20A according to a first modified example. In this cutting wheel 20A, in the mounting hole 32, the first mounting hole 41 of the first substrate 40 and the second mounting hole 51 of the second substrate 50 are formed to have the same diameter. In addition, a plurality of (12 in the illustrated example) through holes 57 for supplying a cooling liquid are formed at a hole edge portion of the second substrate 50 forming the second mounting hole 51.

Furthermore, the hole edge portion of the first substrate 40 and the hole edge portion of the second substrate 50 are thinned such that inner sides thereof become flush with groove bottoms of the first flow path grooves 43 and the second flow path grooves 53, respectively. As a result, an annular inter-substrate reservoir portion 58 into which the inlet ports 35a of the cooling liquid flow paths 35 open is formed inside both hole edge portions. That is, the inter-substrate reservoir portion 58 is formed at the portion defining the mounting hole 32.

In this modified example, a cooling liquid flows mainly through the plurality of through holes 57 into the inter-substrate reservoir portion 58 between the first substrate 40 and the second substrate 50 and is supplied from the inter-substrate annular reservoir portion 58 to each cooling liquid flow path 35 via the inlet ports 35a.

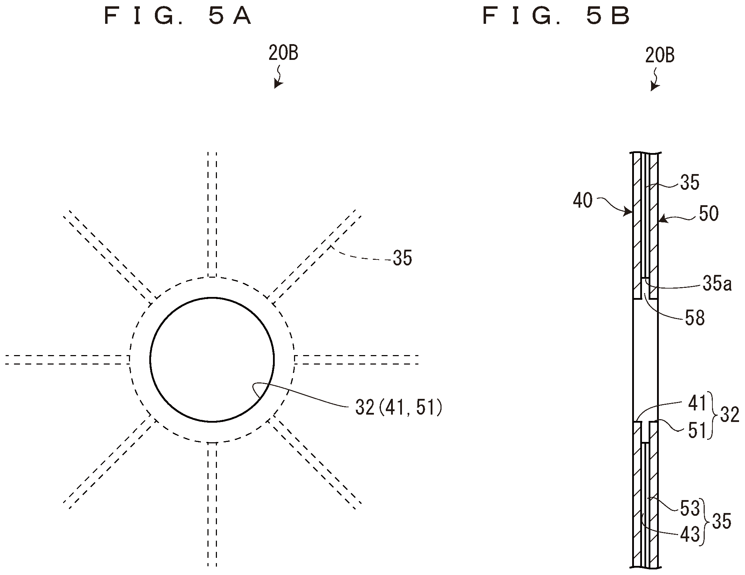

Fig. 5 illustrates a structure of a cutting wheel 20B according to a second modified example. In this cutting wheel 20B, unlike the first modified example, the through holes 57 are not formed, and only the inter-substrate reservoir portion 58 is formed. In this case as well, the inter-substrate reservoir portion 58 is formed at the portion defining the mounting hole 32. Accordingly, in this modified example, a cooling liquid flows from an inner edge of the mounting hole 32 into the inter-substrate reservoir portion 58 and is supplied from the inter-substrate annular reservoir portion 58 to each cooling liquid flow path 35 via the inlet ports 35a.

Note that the structure around the mounting hole 32 of the above-described cutting wheels 20, 20A, and 20B is also applicable to a three-layer cutting wheel although not specifically illustrated. That is, even in a three-layer cutting wheel in which a flow path substrate forming the cooling liquid flow paths 35 is sandwiched between the first substrate 40 and the second substrate 50, it is preferable to form the above-described annular step portion 32a, the through holes 57, the inter-substrate reservoir portion 58, and the like in consideration of the flow of a cooling liquid.

These cutting wheels 20, 20A, and 20B are detachably mounted on the drive shaft 11 via the mounting structure 15 according to the present embodiment in a state in which a cooling liquid can be supplied thereto. Hereinafter, four types of mounting structures 15 according to the first to fourth embodiments will be described, but all of these mounting structures 15 are compatible with the cutting wheels 20, 20A, and 20B. Here, the mounting structure 15 will be described in detail using the cutting wheel 20 as an example.

### [Mounting Structure (First Embodiment)]

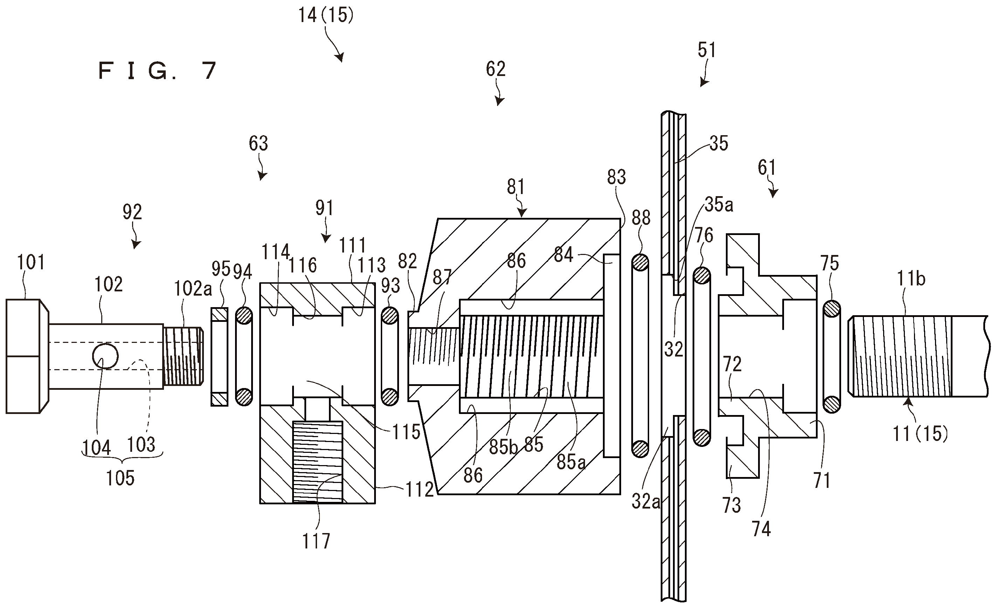

With reference to the cross-sectional view of Fig. 6 and the exploded view of Fig. 7, the mounting structure 15 for the cutting wheel 20 will be described. As illustrated in both figures, the mounting structure 15 includes the drive shaft 11 protruding from the apparatus body 13 (the disk mounting base 24) and the mounting unit 14 mounted on the drive shaft 11 with the cutting wheel 20 sandwiched therebetween. The drive shaft 11 includes a rotation preventing cut shaft portion 11a (rotation preventing shaft portion) and a male threaded shaft portion 11b protruding coaxially from an end surface of the rotation preventing cut shaft portion 11a.

On the other hand, the mounting unit 14 includes an inner flange 61, a lock nut 62, and a supply joint portion 63. In this case, the inner flange 61, the cutting wheel 20, the lock nut 62, and the supply joint portion 63 are supported on the drive shaft 11 and are arranged in this order from the apparatus body 13 (disk mounting base 24) side (see Fig. 6).

The inner flange 61 serves to engage the rotation preventing cut shaft portion 11a of the drive shaft 11 and position the cutting wheel 20 coaxially with the drive shaft 11. The lock nut 62 serves to threadedly engage the male threaded shaft portion 11b of the drive shaft 11 to sandwich the cutting wheel 20 with the inner flange 61, and supply a cooling liquid to the cooling liquid flow paths 35 (the annular step portion 32a) of the cutting wheel 20. Furthermore, the supply joint portion 63 serves to supply a cooling liquid supplied from a cooling liquid supply apparatus (not illustrated) to the rotating lock nut 62.

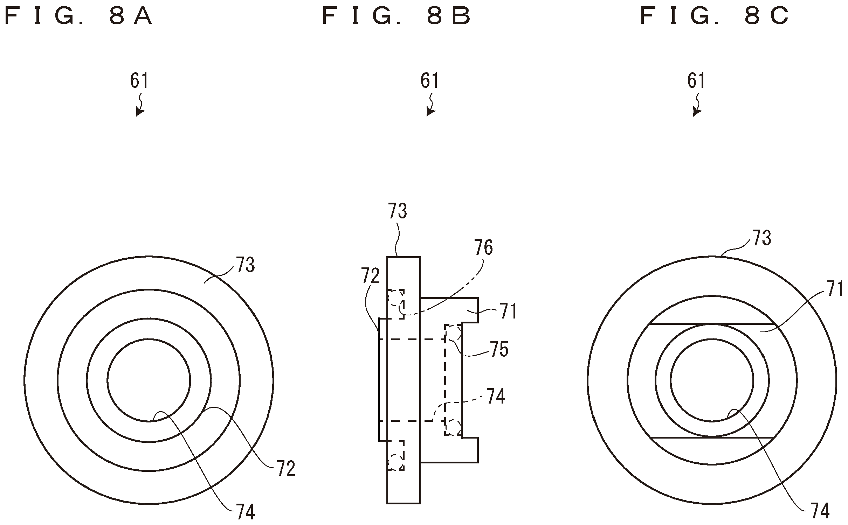

As illustrated in Figs. 6, 7, and 8, the inner flange 61 is integrally formed with a shaft engaging portion 71 engaging the rotation preventing cut shaft portion 11a of the drive shaft 11, a substrate fitting portion 72 continuous with the shaft engaging portion 71 and positioning the cutting wheel 20 (the blade substrate 31) coaxially with the drive shaft 11, and a sandwiching contact portion 73 continuous with the shaft engaging portion 71 and contacting the cutting wheel 20. Furthermore, an insertion hole 74 into which the male threaded shaft portion 11b of the drive shaft 11 is inserted is formed at the axial center of the inner flange 61.

A first O-ring 75 is interposed between the shaft engaging portion 71 and the male threaded shaft portion 11b so as to be positioned on the rotation preventing cut shaft portion 11a. As a result, a gap between the inner flange 61 and the male threaded shaft portion 11b is sealed, thereby preventing leakage of a cooling liquid to the apparatus body 13 side. Similarly, a second O-ring 76 is mounted in a circular groove formed between the substrate fitting portion 72 and the sandwiching contact portion 73. As a result, a gap between the inner flange 61 and the cutting wheel 20 is sealed, thereby preventing leakage of a cooling liquid from the sandwiching contact portion 73.

Thus, since the first O-ring 75 and the second O-ring 76 prevent a cooling liquid from leaking to the apparatus body 13 side along the inner flange 61 and the male threaded shaft portion 11b, intrusion of the cooling liquid into the apparatus body 13 can be effectively prevented.

In the inner flange 61, the shaft engaging portion 71 engages the rotation preventing cut shaft portion 11a from the upper side such that the male threaded shaft portion 11b passes through the insertion hole 74. The inner flange 61 is mounted on the drive shaft 11 in the manner described above, and the cutting wheel 20 is seated on the sandwiching contact portion 73 with the mounting hole 32 (the first mounting hole 41) fitted to the substrate fitting portion 72.

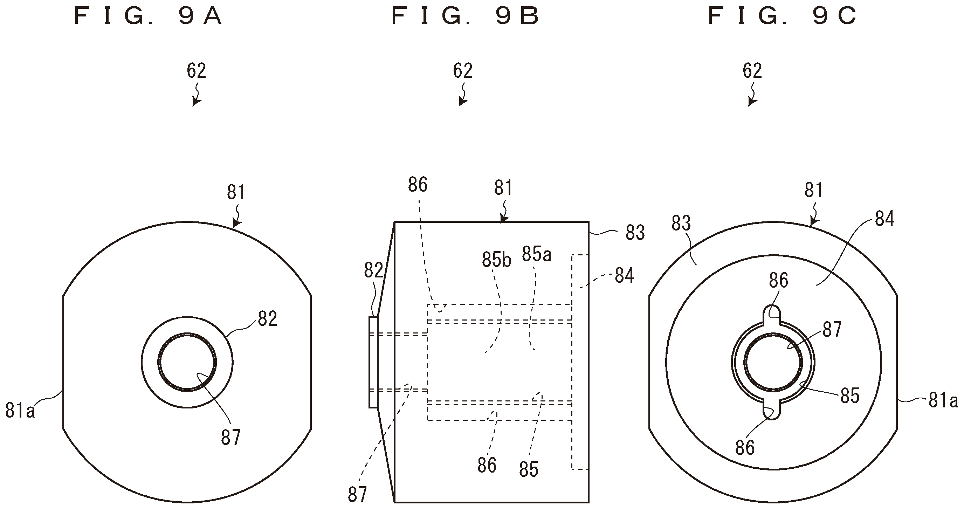

As illustrated in Figs. 6, 7, and 9, the lock nut 62 includes a nut body 81 having a D-cut tool engagement portion 81a formed on an outer peripheral portion thereof, a ring-shaped protruding portion 82 protruding from the distal-end side of the nut body 81, and an annular sandwiching portion 83 formed on the base-end side of the nut body 81 and sandwiching the cutting wheel 20 with the inner flange 61.

Furthermore, the lock nut 62 includes: a cooling liquid reservoir 84 recessed in the sandwiching portion 83 and facing the annular step portion 32a (the inlet port 35a) of the cutting wheel 20; a female threaded portion 85 having a distal-end side thereof continuous with the cooling liquid reservoir 84 and threadedly engaging the male threaded shaft portion 11b of the drive shaft 11; two recessed flow paths 86 recessed in the female threaded portion 85 at two positions; and a connection female threaded portion 87 coaxially continuous with the distal-end side of the female threaded portion 85 and threadedly engaging a connection male threaded member 92, which will be described later.

In this case, the female threaded portion 85 and the connection female threaded portion 87 are formed at the axial center of the nut body 81. When the lock nut 62 threadedly engages the drive shaft 11 via the female threaded portion 85, the drive shaft 11, the inner flange 61, the cutting wheel 20, and the lock nut 62 are integrated and rotate together.

The cooling liquid reservoir 84 faces the annular step portion 32a of the cutting wheel 20 outside the threadedly-engaged male threaded shaft portion 11b, and supplies a cooling liquid to the cooling liquid flow paths 35 of the cutting wheel 20. Furthermore, a third O-ring 88 is mounted in the cooling liquid reservoir 84 so as to contact the cutting wheel 20. As a result, a gap between the lock nut 62 and the cutting wheel 20 is sealed, thereby preventing leakage of a cooling liquid from the sandwiching portion 83.

The female threaded portion 85 has a sufficient depth relative to the length of the male threaded shaft portion 11b. That is, a half portion on the base-end side of the female threaded portion 85 constitutes a threadedly engaging region 85a for the male threaded shaft portion 11b, while another half portion on the distal-end side thereof constitutes a non-threadedly engaging region 85b serving as a flow path for a cooling liquid.

Each recessed flow path 86 is radially recessed in the female threaded portion 85 so as to form a "U"-shaped cross section and extends from the cooling liquid reservoir 84 to the distal-end position of the female threaded portion 85. The two recessed flow paths 86 are recessed at positions point-symmetrical by 180° so as to cut away thread ridges of the female threaded portion 85. That is, the connection female threaded portion 87, the non-threadedly engaging region 85b of the female threaded portion 85, the two recessed flow paths 86, and the cooling liquid reservoir 84 are in communication with each other, and a cooling liquid can be supplied from the supply joint portion 63 toward the cutting wheel 20 via the lock nut 62.

Note that the connection female threaded portion 87, the non-threadedly engaging region 85b of the female threaded portion 85, the two recessed flow paths 86, and the cooling liquid reservoir 84 constitute a "cooling liquid introduction mechanism" recited in the claims, the connection female threaded portion 87, the non-threadedly engaging region 85b of the female threaded portion 85, and the two recessed flow paths 86 constitute an "introduction flow path portion" recited in the claims, and the connection female threaded portion 87 and the non-threadedly engaging region 85b of the female threaded portion 85 constitute a "communication flow path" recited in the claims.

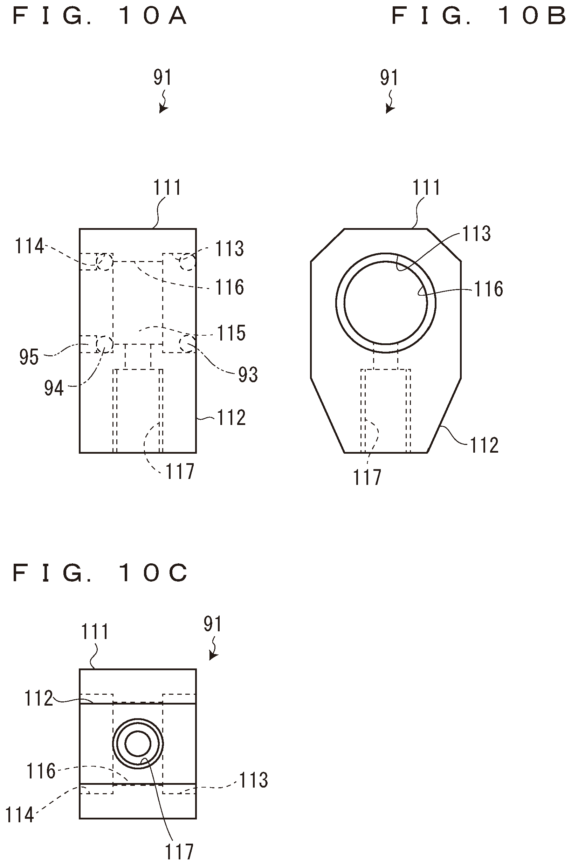

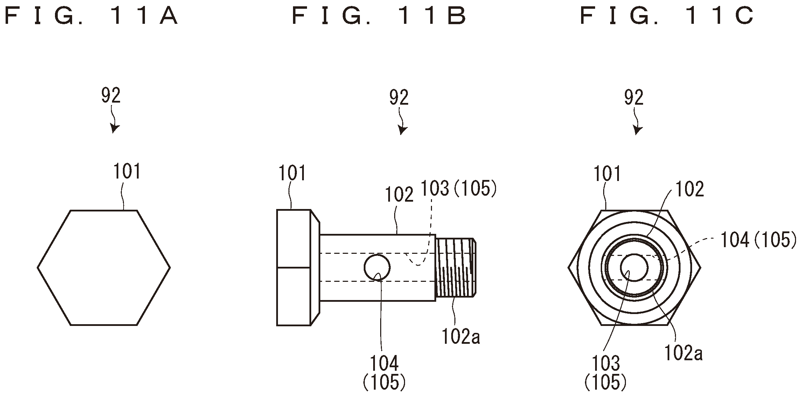

As illustrated in Figs. 6, 7, 10, and 11, the supply joint portion 63 includes a joint body 91 (see Fig. 10) and a connection male threaded member 92 (see Fig. 11) that connects the joint body 91 to the lock nut 62. In this case, the connection male threaded member 92 constitutes a "shaft-shaped rotation portion" recited in the claims as a portion that rotates with the drive shaft 11, whereas the joint body 91 constitutes a "non-rotation member portion" recited in the claims as a portion that does not rotate.

The connection male threaded member 92 threadedly engages the connection female threaded portion 87 of the lock nut 62 while being inserted into (passing through) the joint body 91. Furthermore, a fourth O-ring 93 is interposed between the lock nut 62 and the joint body 91, and a fifth O-ring 94 and a spacer ring 95 are interposed between the joint body 91 and a head portion 101 of the connection male threaded member 92.

As a result, a cooling liquid supplied between the joint body 91 and the lock nut 62 is sealed, and rotation of the lock nut 62 is allowed in this state. That is, the cooling liquid supply apparatus is connected to the joint body 91 via the liquid supply tube 21, and the supply joint portion 63 supplies a cooling liquid to the rotating lock nut 62.

The connection male threaded member 92 includes the head portion 101 and a shaft portion 102, and the shaft portion 102 has a male thread 102a formed at a distal-end portion thereof, the male thread 102a threadedly engaging the connection female threaded portion 87 of the lock nut 62. The shaft portion 102 has a bottomed axial hole 103, which serves as a flow path for a cooling liquid, formed at the axial center thereof, the axial hole 103 being bored from the male thread 102a side. Furthermore, the shaft portion 102 has a radial hole 104 formed at an intermediate portion thereof, the radial hole 104 passing through the shaft portion 102 in the radial direction and communicating with the axial hole 103. Furthermore, the axial hole 103 and the radial hole 104 constitute an axial flow path 105 for a cooling liquid.

When the connection male threaded member 92 threadedly engages the connection female threaded portion 87 of the lock nut 62, a gap between the joint body 91 and the lock nut 62 and a gap between the joint body 91 and the head 101 of the connection male threaded member 92 are sealed, and the axial flow path 105 (the axial hole 103) communicates with the connection female threaded portion 87.

The joint body 91 is integrally formed with a rotation allowance portion 111 into which the connection male threaded member 92 is inserted, and a tube connection portion 112 (connection port portion) to which the liquid supply tube 21 is connected. The rotation allowance portion 111 has a first seal reception hole 113 in which the fourth O-ring 93 is mounted, and a second seal reception hole 114 in which the fifth O-ring 94 and the spacer ring 95 are mounted.

Furthermore, the rotation allowance portion 111 has a loose fitting hole 116 formed between the first seal reception hole 113 and the second seal reception hole 114, the loose fitting hole 116 constituting an annular liquid reservoir 115 for a cooling liquid in a gap around the inserted connection male threaded member 92 (the shaft portion 102). As a result, the annular liquid reservoir 115 of the joint body 91 communicates with the axial hole 103 of the connection male threaded member 92 via the radial hole 104 of the connection male threaded member 92. That is, a cooling liquid in the annular liquid reservoir 115 can be continuously supplied to the connection male threaded member 92 that integrally rotates with the lock nut 62.

The tube connection portion 112 has a taper female thread 117 with which a coupler of the liquid supply tube 21 threadedly engages. Furthermore, when the liquid supply tube 21 is connected to the taper female thread 117, a cooling liquid can be supplied from the cooling liquid supply apparatus to the joint body 91.

Note that a distal end of the rotation preventing arm 18 extending from the cover holder 17 engages the joint body 91 (see Fig. 1). As a result, co-rotation of the joint body 91, to which the liquid supply tube 21 is connected, with the lock nut 62 is prevented.

### [Mounting Structure (Second Embodiment)]

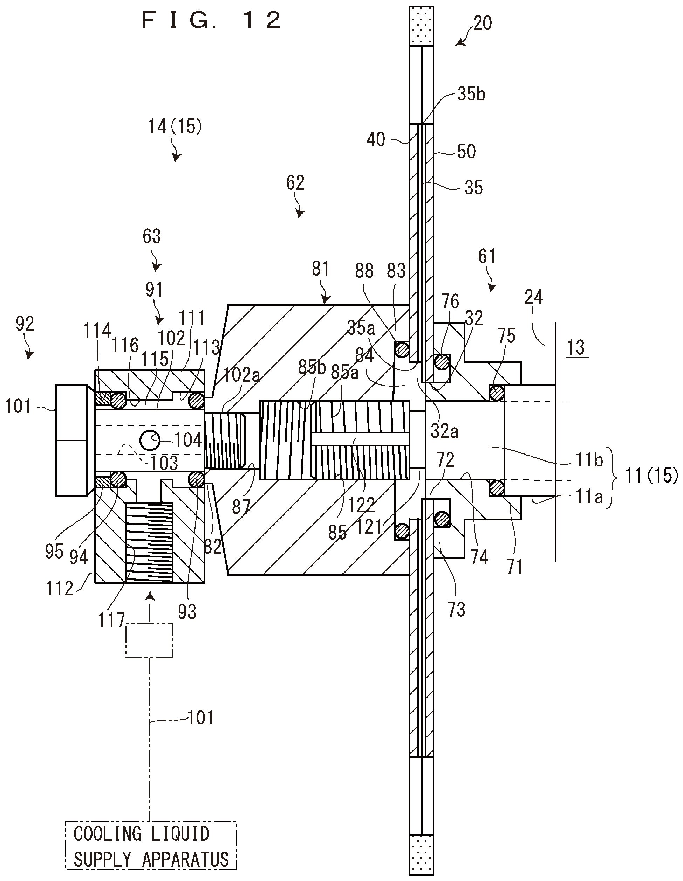

Fig. 12 illustrates an apparatus structure 15A for the cutting wheel 20 according to a second embodiment. In this mounting structure 15A, instead of the above-described two recessed flow paths 86, the male threaded shaft portion 11b has an annular groove flow path 121 and two straight groove flow paths 122. The annular groove flow path 121 is formed at an intermediate portion in the longitudinal direction of the male threaded shaft portion 11b so as to be recessed annularly. The mounting hole 32 of the cutting wheel 20 faces the annular groove flow path 121 in the radial direction, and the outer peripheral surface of the annular groove flow path 121 is in communication with the cooling liquid reservoir 84 over the entire circumference thereof, thereby forming a part of the cooling liquid reservoir 84.

The two straight groove flow paths 122 are provided at positions point-symmetrical by 180° in the circumferential direction of the male threaded shaft portion 11b and recessed at the same depth as the annular groove flow path 121. Each straight groove flow path 122 extends perpendicularly from the annular groove flow path 121 and extends to the distal end of the male threaded shaft portion 11b.

As a result, the upstream sides of the straight groove flow paths 122 are in communication with the above-described non-threadedly engaging region 85b, and the downstream side of the annular groove flow path 121 is in communication with the cooling liquid reservoir 84. A cooling liquid flowing into the non-threadedly engaging region 85b of the lock nut 62 from the axial flow path 105 (the axial hole 103) of the shaft portion 102 reaches the cooling liquid reservoir 84 via the two straight groove flow paths 122 and the annular groove flow path 121 and is supplied from the cooling liquid reservoir 84 to the cutting wheel 20 (the annular step portion 32a).

In this case, the connection female threaded portion 87, the non-threadedly engaging region 85b of the female threaded portion 85, the two straight groove flow paths 122, the annular groove flow path 121, and the cooling liquid reservoir 84 constitute a "cooling liquid introduction mechanism" recited in the claims, the connection female threaded portion 87, the non-threadedly engaging region 85b of the female threaded portion 85, the two straight groove flow paths 122, and the annular groove flow path 121 constitute an "introduction flow path portion" recited in the claims, and the connection female threaded portion 87 and the non-threadedly engaging region 85b of the female threaded portion 85 constitute a "communication flow path" recited in the claims.

### [Mounting Structure (Third Embodiment)]

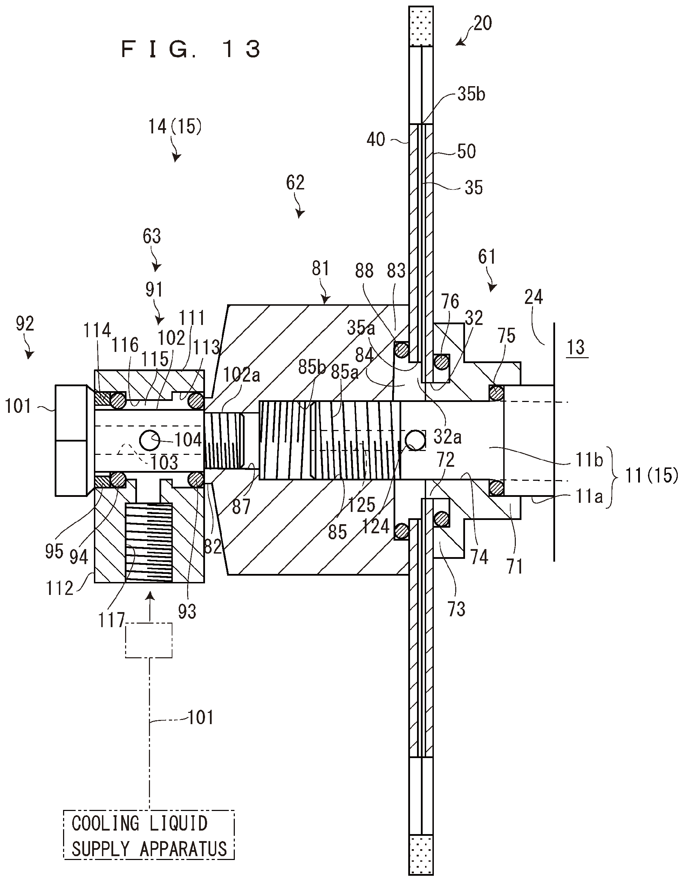

Fig. 13 illustrates an apparatus structure 15B for the cutting wheel 20 according to a third embodiment. In this apparatus structure 15B, instead of the above-described two recessed flow paths 86, the male threaded shaft portion 11b has a through-hole flow path 124 serving as a radial hole flow path and an axial hole flow path 125 serving as an axial hole flow path. The through-hole flow path 124 is formed at an intermediate portion in the longitudinal direction of the male threaded shaft portion 11b so as to penetrate radially. The mounting hole 32 of the cutting wheel 20 faces the through-hole flow path 124 in the radial direction, and both ends of the through-hole flow path 124 are in communication with the cooling liquid reservoir 84.

The axial hole flow path 125 is bored at the axial center of the male threaded shaft portion 11b, extends perpendicularly from the through-hole flow path 124, and extends to the distal end of the male threaded shaft portion 11b. That is, one end portion of the axial hole flow path 125 is in communication with an intermediate portion of the through-hole flow path 124, whereas the other end portion thereof opens into the non-threadedly engaging region 85b of the female threaded portion 85.

As a result, the upstream side of the axial hole flow path 125 communicates with the above-described non-threadedly engaging region 85b, and the downstream side of the through-hole flow path 124 communicates with the cooling liquid reservoir 84. A cooling liquid flowing into the non-threadedly engaging region 85b of the lock nut 62 from the axial flow path 105 (the axial hole 103) of the shaft portion 102 reaches the cooling liquid reservoir 84 via the axial hole flow path 125 and the through-hole flow path 124 and is supplied from the cooling liquid reservoir 84 to the cutting wheel 20 (the annular step portion 32a).

In this case, the connection female threaded portion 87, the non-threadedly engaging region 85b of the female threaded portion 85, the axial hole flow path 125, the through-hole flow path 124, and the cooling liquid reservoir 84 constitute a "cooling liquid introduction mechanism" recited in the claims, the connection female threaded portion 87, the non-threadedly engaging region 85b of the female threaded portion 85, the axial hole flow path 125, and the through-hole flow path 124 constitute an "introduction flow path portion" recited in the claims, and the connection female threaded portion 87 and the non-threadedly engaging region 85b of the female threaded portion 85 constitute a "communication flow path" recited in the claims.

### [Mounting Structure (Fourth Embodiment)]

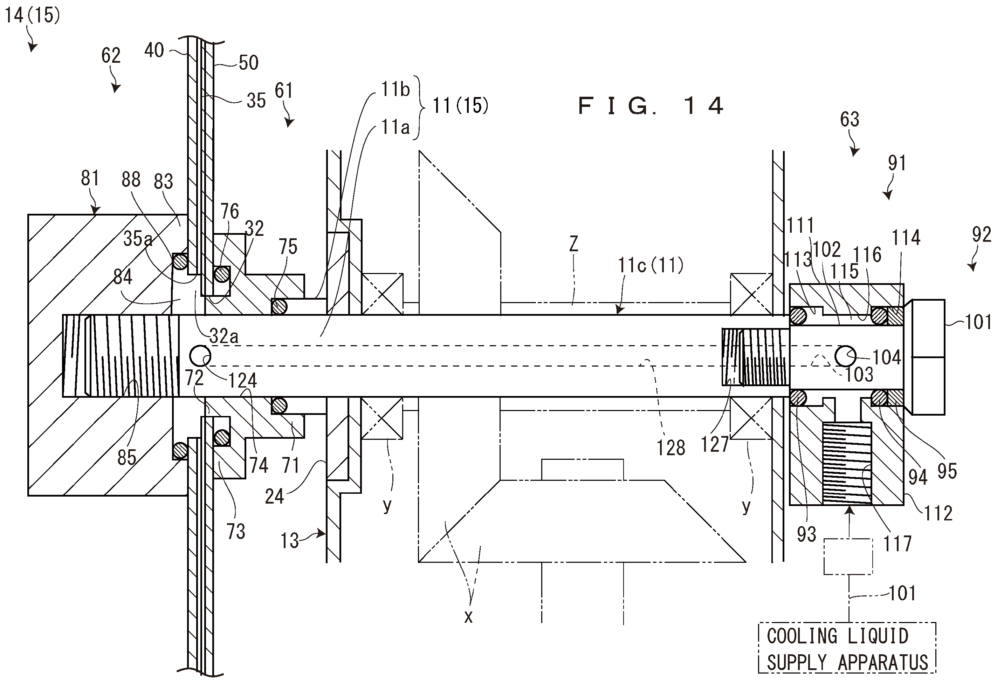

Fig. 14 illustrates an apparatus structure 15C for the cutting wheel 20 according to a fourth embodiment. In this mounting structure 15C, the drive shaft 11 penetrates the apparatus body 13 and extends to the side opposite to the cutting wheel 20, and the above-described supply joint portion 63 is mounted on an extended shaft portion 11c of the drive shaft 11. That is, the extended shaft portion 11c penetrates the apparatus body 13 while being continuous with the base end of the male threaded shaft portion 11b, and has the supply joint portion 63 mounted on the distal end portion thereof. Furthermore, although not illustrated in the figure, a rotation preventing member engages the supply joint portion 63 instead of the rotation preventing arm 18.

Inside the apparatus body 13 through which the extended shaft portion 11c (drive shaft 11) penetrates, a power transmission gear train x, a pair of bearings y, two spacer collars z, and the like are provided, and rotational power of the motor 12 is transmitted to the drive shaft 11 via the power transmission gear train x. The extended shaft portion 11c has the shaft-portion female threaded portion 127 corresponding to the above-described connection female threaded portion 87 formed at the end portion thereof, and the connection male threaded member 92 having the joint body 91 mounted thereon threadedly engages the shaft-portion female threaded portion 127.

On the other hand, the male threaded shaft portion 11b has the through-hole flow path 124 formed therein, whereas the extended shaft portion 11c has an extended axial hole flow path 128 corresponding to the axial hole flow path 125 formed therein. The extended axial hole flow path 128 extends perpendicularly from the through-hole flow path 124, and extends to the shaft-portion female threaded portion 127 of the extended shaft portion 11c.

As a result, the upstream side of the extended axial hole flow path 128 communicates with the axial flow path 105 (the axial hole 103) of the connection male threaded member 92 via the shaft-portion female threaded portion 127, and the downstream side of the through-hole flow path 124 communicates with the cooling liquid reservoir 84. A cooling liquid flowing into the shaft-portion female threaded portion 127 from the axial flow path 105 reaches the cooling liquid reservoir 84 via the extended axial hole flow path 128 and the through-hole flow path 124 and is supplied from the cooling liquid reservoir 84 to the cutting wheel 20 (the annular step portion 32a).

In this case, the shaft-portion female threaded portion 127, the extended axial hole flow path 128, the through-hole flow path 124, and the cooling liquid reservoir 84 constitute a "cooling liquid introduction mechanism" recited in the claims, the shaft-portion female threaded portion 127, the extended axial hole flow path 128, and the through-hole flow path 124 constitute an "introduction flow path portion" recited in the claims, and the shaft-portion female threaded portion 127 constitutes a "communication flow path" recited in the claims.

As described above, according to the present embodiment, the cutting wheels 20, 20A, and 20B are configured to be mounted on the drive shaft 11 of the cutting apparatus 10 via the apparatus structures 15, 15A, 15B, and 15C (mounting unit 14). Therefore, the cutting wheels 20, 20A, and 20B having the cooling liquid flow path 35 can be detachably and properly mounted. That is, the cutting wheels 20, 20A, and 20B can be detachably mounted on the drive shaft 11 via the apparatus structures 15, 15A, 15B, and 15C in a state in which a cooling liquid can be stably supplied.

### REFERENCE SIGNS LIST

- 10: cutting apparatus
- 11: drive shaft
- 11a: rotation preventing cut shaft portion
- 11b: male threaded shaft portion
- 11c: extended shaft portion
- 13: apparatus body
- 14: mounting unit
- 15, 15A, 15B, 15C: mounting structure
- 20, 20A, 20B: cutting wheel
- 32: mounting hole
- 32a: annular step portion
- 35: cooling liquid flow path
- 35a: inlet port
- 40: first substrate
- 41: first mounting hole
- 50: second substrate
- 51: second mounting hole
- 57: through hole
- 58: inter-substrate reservoir portion
- 61: inner flange
- 62: lock nut
- 63: supply joint portion
- 73: sandwiching contact portion
- 74: insertion hole
- 75: first O-ring
- 76: second O-ring
- 81: nut body
- 83: sandwiching portion
- 84: cooling liquid reservoir
- 85: female threaded portion
- 85b: non-threadedly engaging region
- 86: recessed flow path
- 87: connection female threaded portion
- 88: third O-ring
- 91: joint body
- 92: connection male threaded portion
- 93: fourth O-ring
- 94: fifth O-ring
- 111: rotation allowance portion
- 115: annular liquid reservoir
- 121: annular groove flow path
- 122: straight flow path
- 124: through-hole flow path
- 125: axial hole flow path
- 127: shaft-portion female threaded portion
- 128: extended axial hole flow path

## Claims

1. A mounting structure for a cutting wheel in which a cooling liquid is capable of being supplied to the cutting wheel during rotational driving, the cutting wheel having an inlet port of a cooling liquid flow path formed in a portion defining a mounting hole, the mounting structure comprising:
a drive shaft that includes a rotation preventing shaft portion provided on an apparatus body side and a male threaded shaft portion protruding from the rotation preventing shaft portion and rotationally drives the cutting wheel mounted thereon;
an inner flange that engages the rotation preventing shaft portion and receives the cutting wheel mounted on the male threaded shaft portion;
a lock nut that includes a female threaded portion threadedly engaging the male threaded shaft portion and sandwiches and secures the cutting wheel with the inner flange;
a cooling liquid introduction mechanism that is provided in at least one of the drive shaft and the lock nut in a state in which the lock nut threadedly engages the drive shaft and introduces the cooling liquid supplied from a cooling liquid supply source to the inlet port; and
a supply joint portion including a shaft-shaped rotation portion that is arranged coaxially with the drive shaft and fluidly connected to the cooling liquid introduction mechanism and a non-rotation member portion that is fluidly connected to the cooling liquid supply source, wherein
the shaft-shaped rotation portion includes an axial flow path that is in communication with the cooling liquid introduction mechanism, and
the non-rotation member portion includes an annular liquid reservoir that surrounds the shaft-shaped rotation portion and is in communication with the axial flow path in a radial direction, and a connection port portion that is in communication with the annular liquid reservoir and to which the cooling liquid supply source is connected.

2. The mounting structure for the cutting wheel according to claim 1, wherein
the cooling liquid introduction mechanism includes
an annular cooling liquid reservoir provided between the lock nut and the cutting wheel so as to face the inlet port, and
an introduction flow path portion having an upstream side thereof in communication with the axial flow path and a downstream side thereof in communication with the cooling liquid reservoir.

3. The mounting structure for the cutting wheel according to claim 2, wherein
the introduction flow path portion includes
a recessed flow path that is recessed in an inner peripheral surface of the female threaded portion and extends in an axial direction along the female threaded portion from the cooling liquid reservoir, and
a communication flow path that establishes communication between the recessed flow path and the axial flow path.

4. The mounting structure for the cutting wheel according to claim 2, wherein
the introduction flow path portion includes
an annular groove flow path that is formed on an outer peripheral surface of the male threaded shaft portion so as to face the cooling liquid reservoir,
a straight flow path that is formed on the outer peripheral surface of the male threaded shaft portion and extends from the annular groove flow path to a distal end of the male threaded shaft portion, and
a communication flow path that establishes communication between the straight flow path and the axial flow path.

5. The mounting structure for the cutting wheel according to claim 2, wherein
the introduction flow path portion includes
a radial hole flow path that is formed on an outer peripheral surface of the male threaded shaft portion so as to face the cooling liquid reservoir,
an axial hole flow path that is formed at an axial center portion of the male threaded shaft portion and extends from the radial hole flow path to a distal end of the male threaded shaft portion, and
a communication flow path that establishes communication between the axial hole flow path and the axial flow path.

6. The mounting structure for the cutting wheel according to claim 2, wherein
the drive shaft includes an extended shaft portion that penetrates the apparatus body and is extended to an opposite side thereof while being continuous with a base-end side of the male threaded shaft portion, and the supply joint portion is mounted on the extended shaft portion, and
the introduction flow path portion includes
a radial hole flow path that is formed on an outer peripheral surface of the male threaded shaft portion so as to face the cooling liquid reservoir,
an extended axial hole flow path that is formed at axial center portions of the male threaded shaft portion and the extended shaft portion and extends from the radial hole flow path to a distal end of the extended shaft portion, and
a communication flow path that establishes communication between the extended axial hole flow path and the axial flow path.

7. The mounting structure for the cutting wheel according to claim 1, wherein
the inner flange includes a first seal member that seals a gap between the inner flange and the cutting wheel, and a second seal member that seals a gap between the inner flange and the male threaded shaft portion.

8. The mounting structure for the cutting wheel according to claim 1, wherein
the lock nut includes a third seal member that seals a gap between the lock nut and the cutting wheel.
